Europäisches Patentamt

European Patent Office

Office européen des brevets

(11) Numéro de publication: **0 362 090**

**A1**

## (12) DEMANDE DE BREVET EUROPEEN

(21) Numéro de dépôt: **89420370.2**

(22) Date de dépôt: **28.09.89**

(51) Int. Cl.5 **G01P 15/08**

(30) Priorité: **29.09.88 FR 8812988**

(43) Date de publication de la demande:
**04.04.90 Bulletin 90/14**

(84) Etats contractants désignés:
**CH DE ES FR GB IT LI NL SE**

(71) Demandeur: **Société Anonyme : VECTAVIB
119, route d'Heyrieux
F-69800 St Priest(FR)**

(72) Inventeur: **Permuy, Alfred César
11, rue des Recollets
F-75010 Paris(FR)**

(74) Mandataire: **Ropital-Bonvarlet, Claude
Cabinet BEAU DE LOMENIE 99, Grande rue
de la Guillotière
F-69007 Lyon(FR)**

(54) **Procédé de fabrication d'une pièce mécanique comportant un élément sensible d'épaisseur donnée et pièce mécanique obtenue.**

- **Procédé de gravure.**
- **Le procédé comprend les étapes suivantes :**
. **photogravure de la première (13)** et de la seconde **(15)** couches sensibles pour former, respectivement, une zone périphérique **(14)** délimitant le contour **(C)** de la pièce et le contour **(S)** du support **(2)** selon la seconde face,
. attaque selon la zone périphérique **(14)** pour former un sillon **(16)** de profondeur **(H)** déterminée correspondant à l'épaisseur **(e)** de l'élément flexible,
. attaque du substrat jusqu'au fond **(18)** du sillon pour obtenir le détachement de la pièce du substrat,
. et positionnement immédiat de la pièce, après son détachement du substrat, dans une zone de non-attaque, de manière à définir l'épaisseur de l'élément **(e)** flexible.
- Application à la fabrication de capteurs.

Fig. 9

EP 0 362 090 A1

## PROCEDE DE FABRICATION D'UNE PIECE MECANIQUE COMPORTANT UN ELEMENT SENSIBLE D'EPAISSEUR DONNEE ET PIECE MECANIQUE OBTENUE

La présente invention est relative au domaine technique des méthodes ou des processus de fabrication d'une pièce mécanique, au sens général, de natures diverses, comportant au moins un élément flexible d'épaisseur déterminée, rattaché à au moins un support. De telles pièces sont destinées à constituer, de préférence mais non exclusivement, une membrane ou un capteur de grandeurs mécaniques du type, par exemple, piézorésistif ou capacitif.

Selon une application préférée, un tel capteur, du type piézorésistif ou capacitif, se présente sous la forme d'une poutre en porte-à-faux, réalisée en un substrat semi-conducteur monolithique et comporte au moins un élément flexible d'épaisseur déterminée, tel qu'une lame rattachée à au moins un support.

Dans de nombreux domaines d'application, il est nécessaire d'utiliser ce type de capteurs de grandeurs mécaniques, telles que force, accélération, destinés à délivrer des signaux électriques représentatifs des grandeurs mesurées et devant être appliqués à des chaînes électroniques de traitement, afin de permettre des mesures, contrôles, régulation ou asservissement automatiques.

La technique de fabrication de ces capteurs constitués sous la forme de poutres en porte-à-faux, présente une difficulté particulière qui est celle de déterminer avec précision l'épaisseur de l'élément flexible. Cette caractéristique dimensionnelle doit être déterminée avec précision, de manière à permettre l'obtention d'un capteur de sensibilité donnée. Par ailleurs, dans le cas d'un capteur capacitif, il convient de définir précisément la différence de niveau existant entre la base du support et l'élément flexible, dans la mesure où cette différence constitue l'espace interélectrode du capteur.

La technique antérieure a proposé, par le brevet **US 4 670 092**, un premier procédé de fabrication de ces capteurs, consistant à attaquer un substrat de base sur une profondeur déterminée, en relation avec l'épaisseur initiale du substrat, de manière à laisser subsister une lame flexible d'épaisseur correspondante. Un inconvénient de cette technique réside dans le fait que la lame ne peut pas présenter des épaisseurs réduites, dans la mesure où le substrat doit comporter une épaisseur suffisante pour présenter une tenue mécanique suffisante. De plus, il s'avère que cette technique ne permet pas d'obtenir des épaisseurs déterminées de lame, dans la mesure où les substrats de base possèdent des épaisseurs initiales différentes dues aux tolérances de fabrication.

Pour remédier partiellement à cet inconvénient, il peut être envisagé de fabriquer les capteurs à partir de substrat de base comportant des tolérances de fabrication plus réduites. Cette solution a pour conséquence d'augmenter, de manière prohibitive, le coût de fabrication de ces capteurs.

Le second procédé de fabrication connu par le document **"Extended abstracts of the electrochemical Society"**, vol. 82-1, mai 1982, abstract n° 120, p. 188-189, PENNINGTON, NEW JERSEY, US, consiste à former une couche épitaxiale servant de couche d'arrêt d'attaque chimique et permettant de délimiter l'épaisseur de l'élément flexible. Ce procédé présente des inconvénients, dans la mesure où, du fait de l'attaque chimique anisotrope, les contours de l'élément flexible sont mal délimités. Par ailleurs, un tel procédé nécessite la réalisation d'une couche épitaxiale d'une épaisseur donnée et précise, ce qui augmente, de manière non négligeable, le coût de fabrication de ces capteurs.

La présente invention vise, justement, à remédier aux inconvénients énoncés ci-dessus, en proposant un procédé de fabrication d'une pièce mécanique comportant au moins un élément sensible présentant une épaisseur pouvant être déterminée à volonté et de façon précise, quelle que soit l'épaisseur initiale du substrat de base destiné à constituer la pièce.

L'invention vise, également, à proposer un procédé de fabrication permettant de réaliser des pièces mécaniques de natures et de conformations diverses comportant au moins un élément sensible d'épaisseur déterminée et au moins une surcharge localisée d'épaisseur précise.

L'invention vise aussi à offrir un procédé de fabrication d'un coût réduit et de mise en oeuvre simple.

Pour atteindre ces buts, le procédé selon l'invention, pour réaliser une pièce mécanique comportant au moins un élément flexible d'épaisseur déterminée rattaché à au moins un support, comprend les étapes suivantes :

- photogravure de la première couche sensible pour former une zone périphérique délimitant le contour de la pièce,
- photogravure de la seconde couche sensible pour délimiter le contour du support selon la seconde face,
- attaque de la face de référence du substrat selon la zone périphérique pour former un sillon de profondeur déterminée par rapport à la face de référence et correspondant à l'épaisseur de l'élément flexible,
- attaque du substrat, à partir de la seconde face jusqu'au fond du sillon délimitant un plan de raccordement pour obtenir le détachement de la pièce du substrat,

- et positionnement immédiat de la pièce, après son détachement du substrat, dans une zone de non-attaque, de manière à définir et à garantir l'épaisseur donnée de l'élément flexible.

' L'invention vise aussi à proposer une pièce comportant au moins un élément sensible et un support obtenu par le procédé de fabrication selon l'invention.

Diverses autres caractéristiques ressortent de la description faite ci-dessous en référence aux dessins annexés qui montrent, à titre d'exemples non limitatifs, des formes de réalisation de l'objet de l'invention.

La **fig. 1** est une vue en perspective schématique montrant un exemple de capteur intégré connu de grandeurs écaniques.

La **fig. 2** est une vue en plan d'une pastille à partir de laquelle sont fabriqués les capteurs.

La **fig. 3** est une vue en coupe d'un substrat montrant une étape du procédé de fabrication.

La **fig. 4** est une vue de dessus prise, sensiblement, selon les lignes **IV-IV** de la **fig. 3**.

La **fig. 4A** est une vue en coupe du substrat prise, sensiblement, selon les lignes **IVA** de la **fig. 4**.

La **fig. 5** est une vue, analogue à la **fig. 4A**, montrant une étape du procédé selon l'invention.

La **fig. 6** est une vue de dessous du substrat prise, sensiblement, selon les lignes **VI-VI** de la **fig. 5**.

La **fig. 6A** est une vue en coupe prise sensiblement selon les lignes **VIA** de la **fig. 6**.

La **fig. 7** est une vue d'un détail caractéristique du substrat lors d'une étape du procédé de fabrication selon l'invention.

La **fig. 7A** est une vue en coupe montrant le substrat lors d'une étape du procédé selon l'invention.

La **fig. 8** est une vue en perspective schématique du capteur obtenu par le procédé selon l'invention.

La **fig. 9** est une vue en coupe prise, sensiblement, selon les lignes **IX-IX** de la **fig. 8**.

La **fig. 10** est une vue en coupe montrant un substrat lors d'une étape d'une variante du procédé selon l'invention.

La **fig. 10A** est une vue d'un détail caractéristique du substrat.

Les fig. **11** et **12** sont des vues en coupe, analogues à la **fig. 10**, montrant le substrat.

La **fig. 13** est une vue en coupe montrant un substrat obtenu par une autre variante du procédé de fabrication selon l'invention.

La **fig. 14A** est une vue de dessus d'un exemple de réalisation d'une pièce formant une membrane.

La **fig. 14B** est une vue en coupe prise sensiblement selon les lignes **XIV-XIV** de la **fig. 14A**.

Les **fig. 15A à 15I** illustrent le procédé selon l'invention, adapté pour réaliser un autre exemple de capteur.

Les fig. **16A à 16F** illustrent le procédé selon l'invention adapté pour fabriquer un autre exemple de capteur.

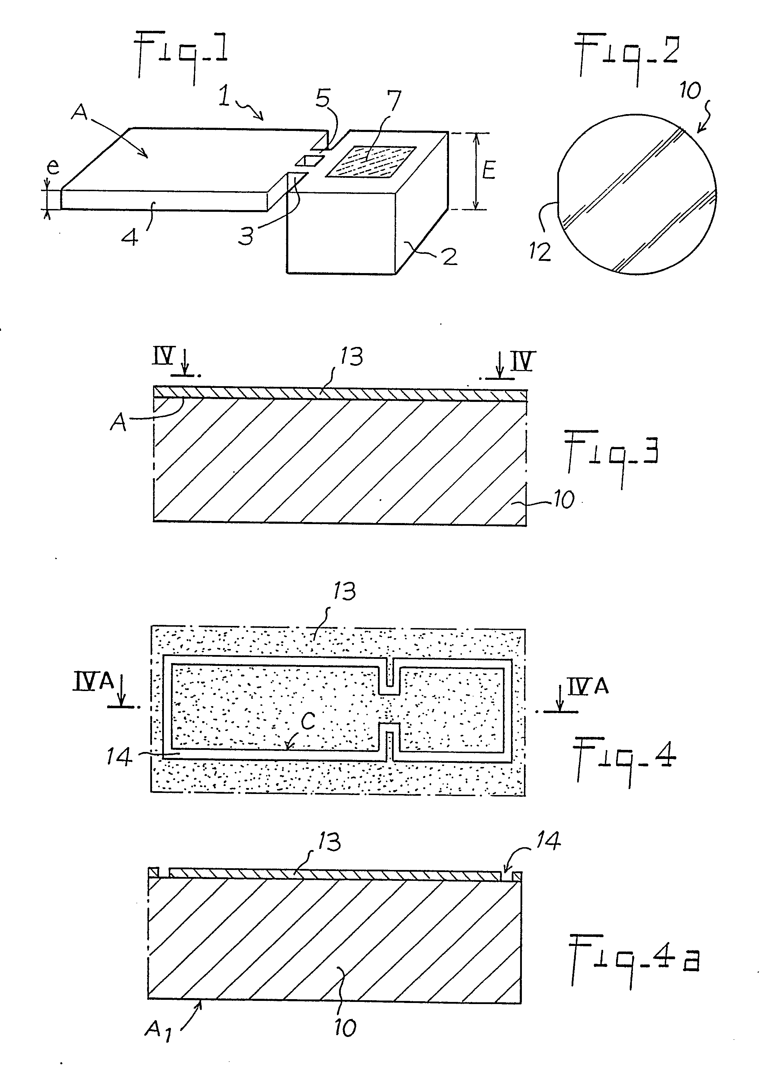

La **fig. 1** illustre la structure de base d'un exemple de réalisation d'une pièce mécanique adaptée pour constituer un capteur intégré **1**, connu en soi, du type se présentant sous la forme d'une poutre en porte-à-faux, et adapté pour fournir directement un signal de niveau compatible avec les techniques de traitement électronique.

Selon cet exemple, le capteur **1**, qui peut, notamment, constituer un accéléromètre, est réalisé en un substrat de base en silicium monocristallin. Le capteur **1** comporte au moins un pied ou un support **2** muni d'un col **3**, à partir duquel s'étend, en porte-à-faux, au moins un élément flexible **4**. Généralement, le support **2** possède une épaisseur $E$, comprise entre 300 et 500 microns, tandis que l'élément flexible **4** présente une épaisseur $e$ comprise entre 10 et 100 microns.

Dans le cas où le capteur est du type capacitif, l'élément flexible **4** est suffisamment dopé pour former une électrode conductrice.

Dans le cas où le capteur **1** est du type piézorésistif, des piézorésistances **5**, par exemple au nombre de quatre, formant un pont, sont implantées, de façon classique et connue de l'homme de métier, sur la face de référence $A$ de la poutre, au niveau du col **3**. Des éléments **7** d'amplification et de traitement du signal sont implantés, de manière tout aussi connue, au niveau du support **2**, sur la face de référence $A$.

Le procédé de fabrication selon l'invention vise à réaliser, d'une manière générale, **n** pièces à partir d'une plaquette mince ou d'un substrat **10** de nature adaptée à la pièce à réaliser (**fig. 2**). Dans un exemple de réalisation, le substrat **10** est du silicium monocristallin et présente, de préférence mais non exclusivement, deux faces opposées de direction cristalline **100** et un méplat **12** de direction cristalline **110**. L'une des faces est destinée à constituer la face de référence $A$ de chacune des pièces.

Pour des raisons de clarté, la description qui suit du procédé de fabrication selon l'invention ne fait référence qu'à la réalisation d'un capteur **1**. Bien entendu, le procédé peut s'appliquer à la réalisation simultanée de **n** capteurs.

Pour des raisons de clarté encore, divers éléments constitutifs, ne faisant pas partie expressément du procédé de l'invention, tels que les piézorésistances 5, les éléments 7 ou les diverses connexions, n'ont pas été représentés.

Les **fig. 3 à 9** illustrent une première variante d'un procédé conforme à l'invention, de fabrication d'un capteur **1** à partir d'un substrat de base **10**, consistant à mettre en oeuvre une technique de gravure par un bain liquide d'attaque anisotropique.

Le procédé de fabrication consiste à déposer, sur la face de référence **A** du substrat, une couche sensible **13**, par exemple de nitrure de silicium (**fig. 3**). Conformément aux **fig. 4** et **4A**, la couche sensible **13** est soumise à une photogravure permettant de former une zone **14** périphérique délimitant le contour **C** en plan du capteur.

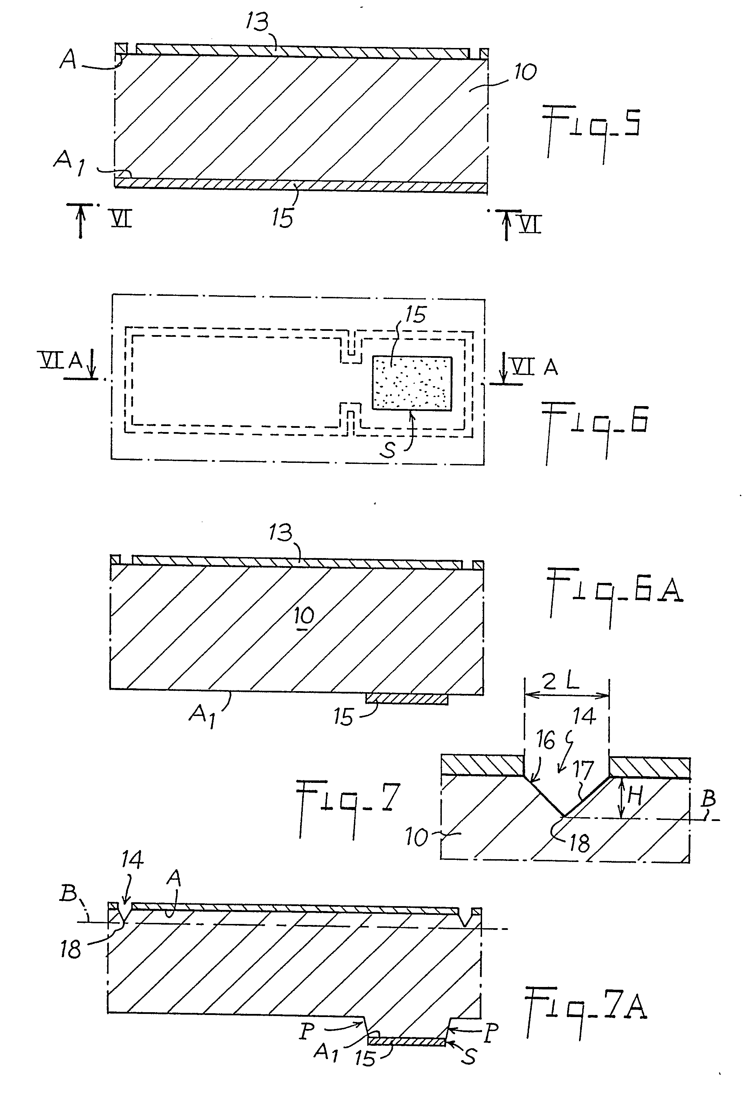

Le substrat **10** est recouvert, sur sa face **A₁** de direction cristalline **100** et opposée à la face de référence **A** (**fig. 5**), d'une couche sensible **15**, par exemple d'oxyde de silicium, qui est soumise à une photogravure pour délimiter le contour **S** en plan du support **2** (**fig. 6-6A**).

Le substrat **10** est alors immergé dans un bain liquide d'attaque anisotropique permettant d'obtenir un arrêt de l'attaque du substrat selon des plans cristallins privilégiés. De préférence, le bain liquide est choisi pour interrompre son action de gravure selon les plans **p** cristallins **111**. Aussi, tel que cela ressort plus précisément de la **fig. 7**, le bain de liquide attaque le substrat **10**, selon la zone périphérique **14**, pour former un sillon **16** délimité par deux flancs **17** s'étendant chacun selon un plan cristallin **111**. L'attaque du bain liquide s'interrompt, pour la zone **14**, lorsque les flancs se rejoignent pour former le fond **18** du sillon, qui s'étend selon un plan **B** de raccordement, sensiblement parallèle à la face de référence **A** (**fig. 7A**).

En choisissant la demi-largeur **L** de la zone périphérique **14**, il peut être obtenu un sillon **16** de profondeur déterminée : **H = L/2^½**. Selon l'invention, la profondeur **H** du sillon est choisie pour correspondre à l'épaisseur **e** de l'élément flexible du capteur.

Le bain liquide continue son attaque à partir de la face **A₁**, suivant les plans **p** cristallins **111** jouxtant le contour **S** du support **2**. Le bain liquide poursuit son action de gravure jusqu'au plan de raccordement **B** permettant de dégager un espace libre autour de la poutre et d'obtenir, par découpe, la formation de l'élément flexible **4** et du support **2** (**fig. 8**). Le plan de raccordement **B** contient ainsi la face interne de l'élément flexible **4**, opposée à la face de référence **A**.

Le capteur ainsi formé se détache immédiatement de la plaquette **10** et se trouve positionné, conformément au procédé de l'invention, dans une zone où la vitesse de gravure est fortement ralentie, de sorte que l'attaque s'arrête précisément au niveau du plan de raccordement **B**, ce qui permet de garantir une épaisseur **e** déterminée à l'élément flexible. Avantageusement, le capteur ainsi formé est positionné dans la zone de non attaque en utilisant le déplacement naturel du capteur, obtenu par son détachement du substrat. Dans le cas où le capteur tombe par gravité, le bain liquide d'attaque comporte une partie inférieure refroidie destinée à recevoir les capteurs et à interrompre l'attaque, tandis que la partie supérieure du bain liquide qui est chauffée agit sur la plaquette.

Le procédé de fabrication selon l'invention, qui consiste à attaquer la plaquette sur ses deux faces, permet donc d'obtenir des capteurs comportant un élément flexible d'épaisseur **e** déterminée en relation avec la largeur de la zone **14** et indépendante de l'épaisseur du substrat ou, d'une manière générale, de celle de la plaquette de silicium.

Tel que cela apparaît plus précisément à la **fig. 9**, la poutre, obtenue par le procédé, comporte un premier bord périphérique **20** s'étendant à partir de la face de référence **A** jusqu'au plan de raccordement **B**, selon une section droite transversale croissante et un profil rectiligne défini par les plans **p** cristallins **111**. La poutre comporte un second bord périphérique **21** délimitant plus particulièrement le support **2** et s'étendant à partir de la seconde face **A₁** du substrat, jusqu'au plan de raccordement **B**, selon une section droite transversale croissante et un profil rectiligne défini par les plans **p** cristallins **111**.

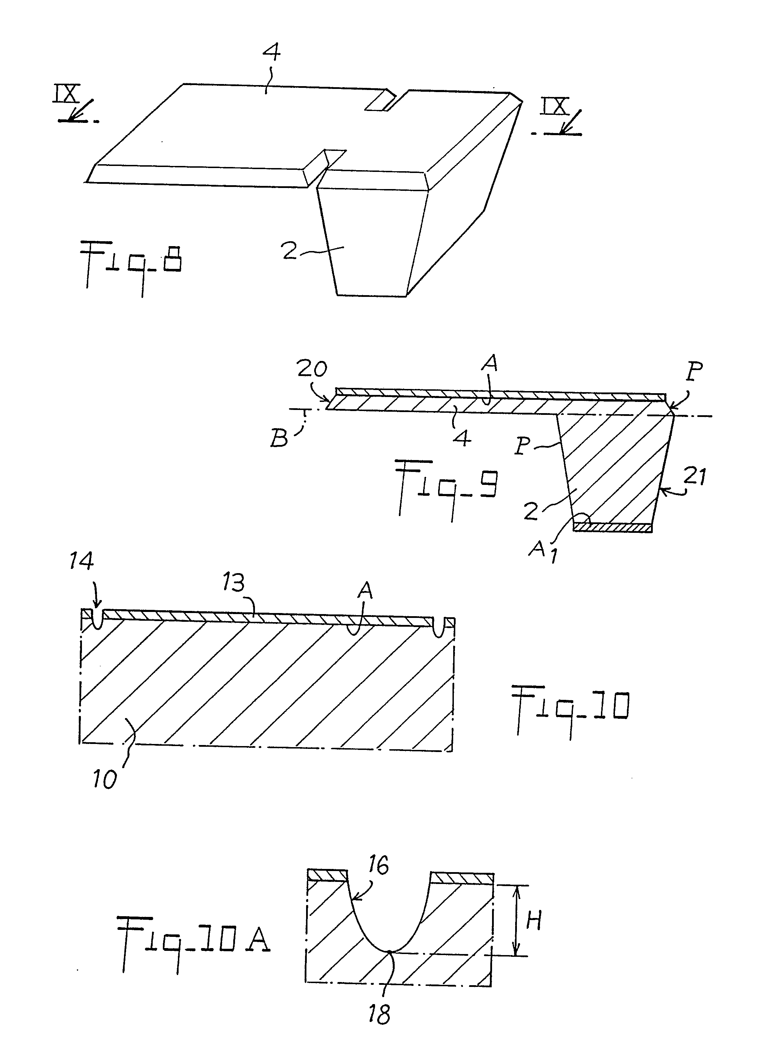

Les **fig. 10 à 12** illustrent une autre variante d'un procédé de fabrication selon l'invention consistant à procéder à l'attaque du substrat, soit par un plasma, soit par un bain liquide d'attaque isotropique. Ce procédé découle directement de la description qui précède.

Après formation de la couche sensible **13**, par exemple réalisée en aluminium, sur la face de référence **A** du substrat, la couche sensible **13** est soumise à une opération de photogravure, comme illustrée précédemment (**fig. 3, 4, 4A**).

Tel que cela apparaît aux **fig. 10-10A**, le substrat **10** est alors attaqué sur sa face de référence **A**, de manière qu'apparaisse, au niveau de la zone périphérique **14**, un sillon **16** de profondeur **H** déterminée pour correspondre à l'épaisseur de l'élément flexible **4**. La profondeur **H** du sillon est déterminée et contrôlée expérimentalement, en relation avec le type de plasma et de bain liquide isotropique utilisé.

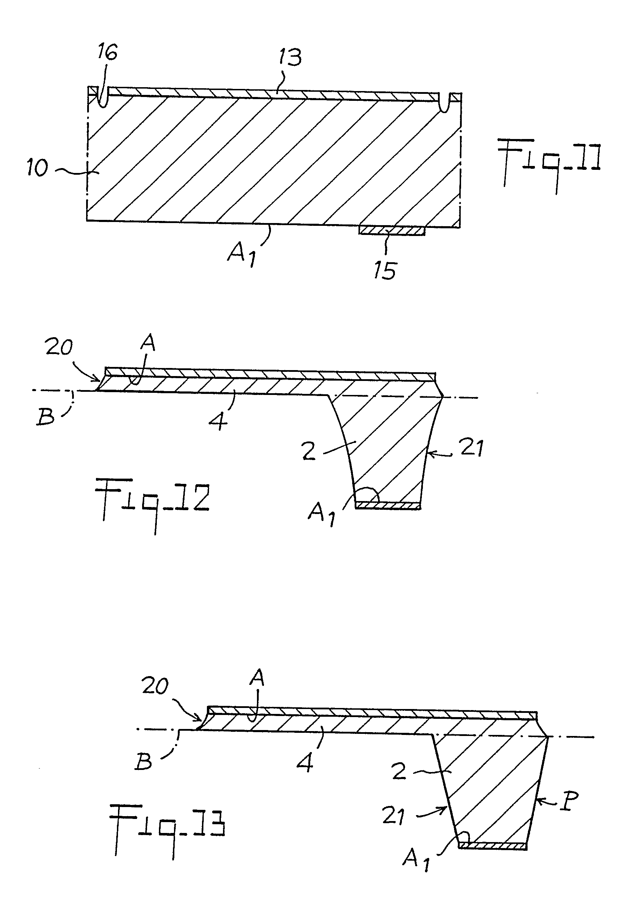

Après la formation d'une couche sensible **15** sur la face opposée **A₁** et une opération de photogravure de cette couche sensible, réalisée, de préférence, en aluminium (**fig. 11**), la face **A₁** est soumise à une attaque de gravure qui est poursuivie jusqu'au plan de raccordement **B**, contenant le fond **18** du sillon, de manière à obtenir la formation de l'élément flexible **4** et du support **2** (**fig. 12**), constitutif du capteur qui se détache alors du substrat. La séparation physique, entre le capteur et le substrat, permet de soustraire le capteur à l'attaque de gravure, ce qui permet de garantir une épaisseur précise et déterminée à l'élément flexible, indépendante de l'épaisseur initiale présentée par le substrat.

Cette variante du procédé de fabrication permet l'obtention d'un capteur comportant des bords périphériques 20, 21 s'étendant chacun selon une section droite croissante et un profil incurvé pseudo-circulaire.

Bien entendu, il pourrait être envisagé de procéder à l'attaque d'une des faces du substrat 10, par un bain liquide d'attaque anisotropique et, de l'autre des faces, par un plasma ou un bain liquide d'attaque isotropique.

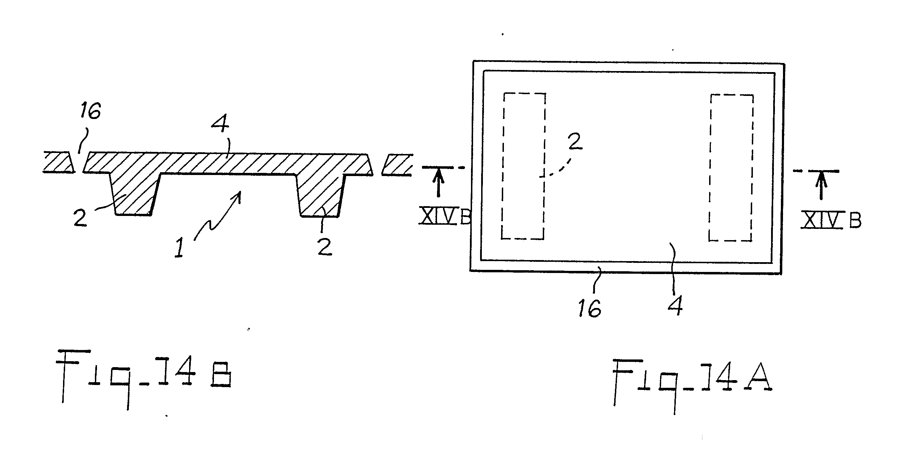

A titre d'exemple, la fig. 13 illustre un capteur dont la face de référence A a été attaquée par un plasma ou par un bain liquide d'attaque isotropique (profil incurvé du bord 20), tandis que la face opposée $A_1$ a été soumise à un bain liquide d'attaque anisotropique (profil rectiligne du bord 21).

Le procédé selon l'invention, qui vient d'être décrit pour fabriquer un capteur constitué sous la forme d'une poutre comportant un élément flexible rattaché à un support, peut être, bien entendu, mis en oeuvre pour réaliser un capteur comportant plusieurs supports et/ou divers éléments flexibles d'épaisseur déterminée égale ou non. Par ailleurs, le procédé de l'invention est adapté aussi pour fabriquer des pièces de formes et de fonctions diverses, réalisées chacune dans un matériau, tel que du cuivre ou de l'aluminium, choisi en relation avec l'application visée. A titre d'exemple, les **fig. 14A** et **14B** illustrent une pièce 1 formant une membrane constituée d'un élément flexible 4 rattaché à deux supports 2 et obtenue par le procédé de l'invention décrit ci-dessus.

En outre, dans certaines applications, la pièce à réaliser doit comporter au moins une surcharge localisée sur l'une des faces de la pièce. Par exemple, une telle surcharge est montée sur l'extrémité de l'élément flexible d'un capteur du type capacitif pour augmenter la sensibilité de mesure.

Les **fig. 15A à 15I** illustrent un exemple de réalisation d'une surcharge 24 sur l'élément flexible 4 d'un capteur.

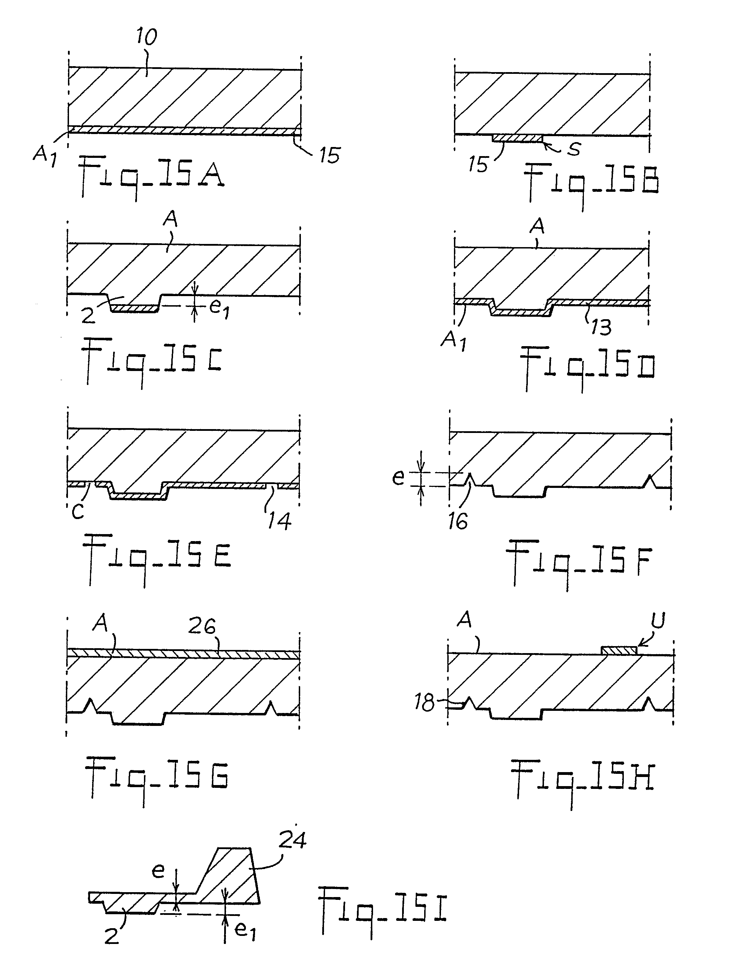

Après la formation de la couche sensible 15, par exemple sur la face $A_1$ du substrat 10, la couche sensible 15 est soumise à une opération de photogravure **(fig. 15B)** destinée à délimiter le contour **S** du support 2. La face $A_1$ est alors attaquée sur une profondeur déterminée $e_1$ dont la fonction apparaîtra plus clairement dans la suite de la description **(fig. 15C)**.

La couche sensible 13 est alors déposée sur la face opposée de celle de référence **A**, pouvant être considérée comme la face $A_1$ **(fig. 15D)**. La couche sensible 13 est alors soumise à une opération de photogravure permettant de former la zone 14 périphérique délimitant le contour **C** en plan du capteur **(fig. 15E)**. La face $A_1$ est soumise à une attaque de gravure de manière qu'apparaisse le sillon 16 de profondeur déterminée **e** **(fig. 15F)**.

Après la formation d'une couche sensible supplémentaire 26 sur la face de référence **A** **(fig. 15G)**, une opération de photogravure de cette couche est réalisée pour délimiter, en plan, le contour **U** de la surcharge 24 **(fig. 15H)**. La face **A** est soumise à une attaque de gravure qui est poursuivie jusqu'au fond 18 du sillon pour obtenir la découpe du capteur. Ce dernier est immédiatement placé dans une zone d'arrêt de gravure permettant d'obtenir une lame flexible d'épaisseur **e** déterminée **(fig. 15I)**.

Par ailleurs, il apparaît que l'épaisseur $e_1$, pouvant être définie précisément, peut constituer, avantageusement, l'espace inter-électrode du capteur.

Il doit être noté que le procédé décrit ci-dessus met en oeuvre une attaque par plasma. Bien entendu, si une attaque par un bain liquide d'attaque anisotropique est effectuée, il convient de procéder à des masquages adaptés sur la pièce pour la protéger des attaques ultérieures.

Les **fig. 16A à 16F** illustrent un autre exemple de réalisation, par le procédé de l'invention, mettant en oeuvre une attaque plasma d'un capteur comportant, sur une même face, la surcharge 24 et le support **S**.

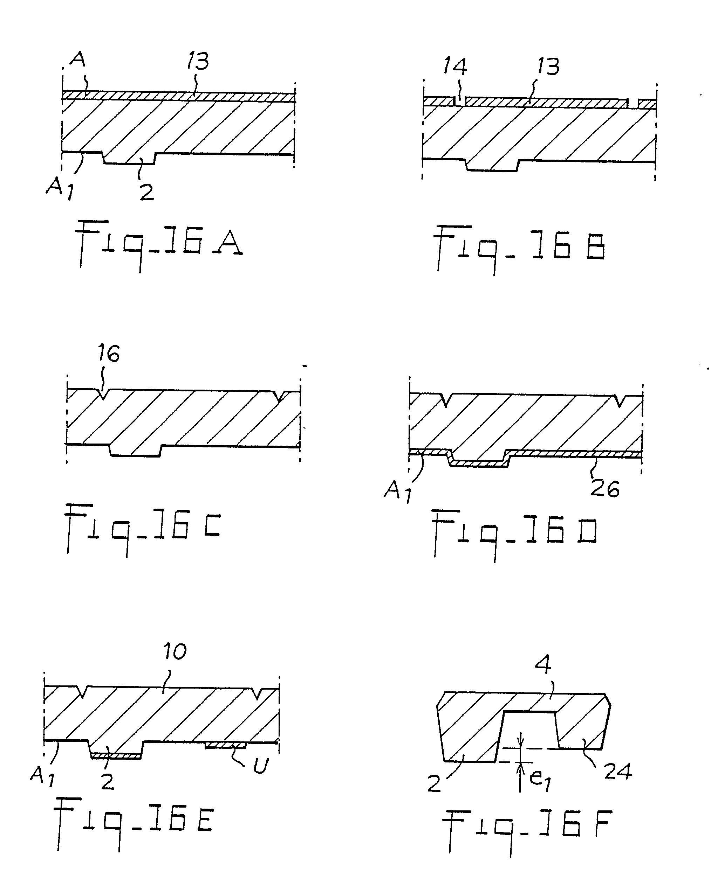

Après la formation du support 2 sur la face **A**, comme décrit par les **fig. 15A à 15C**, la couche sensible 13 est déposée et celui du support 2 pour le protéger de l'attaque de gravure ultérieure **(fig. 16E)**. Le substrat 10 est alors soumis, selon sa face $A_1$, à une opération de gravure qui est poursuivie jusqu'à la découpe du capteur.

Il apparaît donc clairement que le procédé selon l'invention permet de fabriquer une pièce comportant, d'une part, au moins un élément flexible d'épaisseur **e** déterminée et, d'autre part, au moins une surcharge localisée sur l'une ou l'autre des faces de la pièce et décalée d'une hauteur donnée $e_1$ par rapport au support de la pièce.

De plus, le procédé selon l'invention permet de réaliser, simultanément, **n** pièces se détachant de la plaquette considérée. De préférence, la plaquette est soumise, sur ses deux faces, à une opération de photogravure pour définir un réseau constitué de mailles destinées chacune à entourer une pièce à réaliser. Un tel réseau de mailles permet de conserver une rigidité mécanique à la plaquette, malgré les détachements successifs des pièces.

L'invention n'est pas limitée aux exemples décrits et représentés, car diverses modifications peuvent y être apportées sans sortir de son cadre.

## Revendications

1 - Procédé de fabrication à partir d'un substrat (10). d'une pièce mécanique telle qu'un capteur ou une membrane comportant au moins un élément flexible (4) d'épaisseur déterminée (e). rattaché à au moins un support (2), du type consistant, d'une part, à déposer une première couche sensible (13) sur une première face (A) dite de référence du substrat et une seconde couche sensible (15) sur une seconde face (A₁) du substrat, opposée à la face de référence,
caractérisé en ce qu'il comprend les étapes suivantes :
- photogravure de la première couche sensible (13) pour former une zone périphérique (14) délimitant le contour (C) de la pièce,
- photogravure de la seconde couche sensible (15) pour délimiter le contour (S) du support (2) selon la seconde face,
- attaque de la face de référence du substrat selon la zone périphérique (14) pour former un sillon (16) de profondeur (H) déterminée par rapport à la face de référence et correspondant à l'épaisseur (e) de l'élément flexible,
- attaque du substrat, à partir de la seconde face jusqu'au fond (18) du sillon délimitant un plan de raccordement (B) pour obtenir le détachement de la pièce du substrat,
- et positionnement immédiat de la pièce. après son détachement du substrat, dans une zone de non-attaque. de manière à définir et à garantir l'épaisseur (e) donnée de l'élément flexible.

2 - Procédé selon la revendication 1, caractérisé en ce qu'il consiste à assurer le positionnement immédiat de la pièce dans une zone de non attaque, en utilisant son déplacement naturel obtenu par son détachement du substrat.

3 - Procédé selon la revendication 1 ou 2, caractérisé en ce qu'il consiste à réaliser au moins une surcharge (24) localisée sur la pièce, dont la fabrication comporte, pour chaque surcharge, les étapes suivantes :
- dépôt d'une couche sensible supplémentaire (26) sur une face choisie du substrat,
- photogravure de la couche sensible supplémentaire (26) pour délimiter au moins le contour (U) de la surcharge (24) sur la face choisie,
- attaque de la face choisie pour former au moins le contour (U) de la surcharge.

4 - Procédé selon l'une des revendications 1 à 3, caractérisé en ce qu'il consiste à réaliser simultanément n pièces mécaniques, à partir d'un substrat comportant un réseau de rigidification mécanique constitué de mailles entourant chacune une pièce à fabriquer.

5 - Procédé selon la revendication 1 ou 3, caractérisé en ce qu'il consiste à procéder à l'attaque des deux faces du substrat, à l'aide d'un bain liquide d'attaque anisotropique.

6 - Procédé selon la revendication 1, 3 ou 4, caractérisé en ce qu'il consiste à procéder à l'attaque des deux faces du substrat à l'aide d'un plasma ou d'un bain liquide d'attaque isotropique.

7 - Procédé selon la revendication 1, 3 ou 4, caractérisé en ce qu'il consiste à procéder à l'attaque d'une des faces du substrat, par un bain liquide d'attaque anisotropique, et de l'autre des faces, par un plasma ou un bain liquide d'attaque isotropique.

8 - Procédé selon les revendications 1, 5 ou 7, caractérisé en ce qu'il consiste à choisir :
- une zone périphérique (14) de demi-largeur (L) donnée,
- un substrat (10) dont la face de référence (A) présente un plan cristallin (100),
- et un bain liquide d'attaque interrompant son action de gravure selon les plans cristallins (111) pour obtenir une épaisseur d'élément sensible égale à $L/2^{\ddagger}$.

9 - Procédé selon la revendication 5, 7 ou 8, caractérisé en ce qu'il consiste à mettre en oeuvre un bain liquide d'attaque comportant une partie supérieure chauffée, destinée à immerger le substrat et une partie inférieure refroidie destinée à recevoir les capteurs et à interrompre l'attaque chimique.

10 - Pièce obtenue par le procédé de fabrication selon l'une des revendications 1 à 9, caractérisée en ce qu'elle comporte :
- un premier bord (20) entourant la périphérie de la pièce et s'étendant à partir de la face de référence (A) jusqu'au plan de raccordement (B) selon une section droite transversale croissante,
- et un second bord (21) périphérique au support s'étendant à partir de la seconde face (A₁) jusqu'au plan de raccordement (B) selon une section droite transversale croissante.

11 - Pièce selon la revendication 10, caractérisée en ce que les deux bords périphériques (20, 21) s'étendent selon des profils rectilignes déterminés par des plans cristallins (p).

12 - Pièce selon la revendication 10, caractérisée en ce que les deux bords périphériques (20, 21) s'étendent selon des profils incurvés pseudo-circulaires.

13 - Pièce selon la revendication 10, caractérisée en ce que l'un des bords périphériques s'étend selon un profil rectiligne, tandis que l'autre bord périphérique s'étend selon un profil incurvé pseudo-circulaire.

Fig_1

Fig_2

Fig_3

Fig_4

Fig_4a

EP 0 362 090 A1

Fig_5

Fig_6

Fig_6A

Fig_7

Fig_7A

Fig_8

Fig_9

Fig_10

Fig_10 A

Fig. 11

Fig. 12

Fig. 13

Fig. 14 A

Fig. 14 B

Fig_15A

Fig_15B

Fig_15C

Fig_15D

Fig_15E

Fig_15F

Fig_15G

Fig_15H

Fig_15I

Fig_16 A

Fig_16 B

Fig_16 C

Fig_16 D

Fig_16 E

Fig_16 F

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-3 888 708 (WISE)<br>* Colonne 1, lignes 12-39; colonne 1, ligne 60 - colonne 2, ligne 6; colonne 2, ligne 48 - colonne 3, ligne 23; colonne 3, lignes 30-41; colonne 4, lignes 45-47; figures 1-5 * | 1,4,5,8,10,11 | G 01 P 15/08 |
| Y | | 6,7,13 | |
| A | --- | 2,3 | |
| Y | JOURNAL OF THE ELECTROCHEMICAL SOCIETY, vol. 133, no. 8, août 1986, pages 1724-1729, Manchester, NH, US: P.M. SARRO et al.: "Siclicon cantilever beams fabricated by electrochemically controlled etching for sensor applications"<br>* Page 1726, colonne 1; figure 4 * | 7,13 | |
| A | IDEM<br>--- | 6,12 | |
| Y | PROCEEDINGS OF THE IEEE, vol. 70, no. 5, mai 1982, pages 420-457, IEEE, New York, US; K.E. PETERSEN: "Silicon as a mechanical material"<br>* Page 423, colonne 2, paragraphe 2 - page 426, paragraphe 1; figures 4-5 * | 6 | DOMAINES TECHNIQUES RECHERCHES (Int. Cl.5)<br><br>G 01 P<br>H 01 L |
| A | IDEM<br>----- | 12 | |

Le présent rapport a été établi pour toutes les revendications

| Lieu de la recherche | Date d'achèvement de la recherche | Examinateur |
|---|---|---|
| LA HAYE | 16-11-1989 | ROBINSON M.A. |